# FASCICULE DE BREVET EUROPEEN

(11) **EP 1 055 195 B1**
(45) Date de publication et mention de la délivrance du brevet: **02.05.2003**
(21) Numéro de dépôt: 99903749.2
(22) Date de dépôt: 12.02.1999
(51) Int. Cl.: G06K 19/10, G06K 17/00

(54) **PROCEDE DE FABRICATION D'UNE CARTE A CIRCUIT INTEGRE**
VERFAHREN ZUR HERSTELLUNG EINER IC-KARTE
METHOD FOR MAKING A CARD WITH INTEGRATED CIRCUIT

(30) Priorité: 13.02.1998 FR 9801755
(43) Date de publication de la demande: 29.11.2000
(73) Titulaire: SCHLUMBERGER Systèmes, 92120 Montrouge (FR)
(72) Inventeur: EL YAMANI, Hayat, F-94240 L'Hay les Roses (FR); DELSERIEYS, Yves, F-92390 Villeneuve la Garenne (FR); POIRIER, Jean-Luc, F-91400 Orsay (FR)
(74) Mandataire: Macquet, Christophe
(86) Numéro de dépôt international: FR9900323
(87) Numéro de publication internationale: WO99041702

(56) Documents cités:
- EP-A- 0 370 114
- WO-A-92/09052
- FR-A- 2 622 323

## Description

La présente invention concerne un procédé de fabrication et de personnalisation graphique d'une carte à circuit intégré, telle qu'une carte bancaire, une carte pour téléphones portables, une carte prépayée, une carte d'identification....

Un procédé courant de fabrication de cartes à circuit intégré consiste à imprimer le cas échéant un décor sur une face du corps de la carte, de préférence recouvrir le décor d'une couche de protection, implanter le circuit intégré dans le corps de carte, imprimer des données de personnalisation telles qu'un numéro de série et/ou des informations afférentes au titulaire de la carte notamment sous formes alphanumériques ou codes barres, et écrire dans une zone-mémoire du circuit intégré les données correspondant aux données de personnalisation du corps de carte. Le circuit intégré est pourvu de plages conductrices qui s'étendent en saillie du décor ou de la couche de protection de sorte que lors de l'impression par transfert thermique des données de personnalisation, il arrive que la tête d'impression heurte les plages conductrices. La tête d'impression, ainsi que les plages conductrices, risquent alors d'être endommagées. Afin de pallier cet inconvénient on a recherché à enfoncer totalement les plages conductrices dans le corps de carte ou à réaliser un montage flottant pour la tête d'impression des données de personnalisation graphiques mais les solutions envisagées ne se sont pas avérées satisfaisantes.

Selon l'invention, on propose un procédé de fabrication d'une carte, comprenant dans l'ordre les étapes de :
- imprimer des données de personnalisation sur une face du corps de carte,
- implanter un circuit intégré dans un corps de carte,
- écrire dans une zone-mémoire du circuit intégré des données correspondant aux données de personnalisation du corps de carte.

L'impression des données de personnalisation étant ainsi réalisée avant la mise en place du circuit intégré, la tête d'impression ne risque pas d'être endommagée sans qu'il soit nécessaire de prévoir un montage spécial pour la tête d'impression.

Avantageusement, un décor est imprimé de façon simultanée avec les données de personnalisation.

Le procédé de fabrication est ainsi rapide et de mise en oeuvre simple.

Un inconvénient supplémentaire du procédé de fabrication du type connu, réside dans le fait que les données de personnalisation, imprimées sur la couche de protection du décor, sont exposées aux agressions extérieures de sorte qu'elles risquent d'être effacées, par exemple accidentellement, à la suite de frottements répétés, ou intentionnellement, à l'aide d'un solvant, en vue d'une modification non autorisée des données. Afin d'améliorer la résistance de ces données, on a pensé à inscrire les données de personnalisation par gravure laser de la face du corps de carte ou par déformation plastique du corps de carte pour former une inscription en relief. Les inscriptions ainsi réalisées ne peuvent être effacées. Cependant, ces modes d'inscription nécessitent des opérations longues et un matériel onéreux augmentant le coût de revient des cartes ainsi personnalisées.

De préférence le procédé comprend, postérieurement à l'étape d'impression du décor et des données de personnalisation, l'étape de recouvrement de ladite face du corps de carte d'une couche de protection.

La couche de protection assure de la sorte, la protection des données de personnalisation, et le cas échéant du décor, tant lors de la fabrication de la carte que lors de l'utilisation ultérieure de celle-ci. Les données de personnalisation ne peuvent donc être effacées accidentellement et toute tentative de modification des données de personnalisation nécessite le retrait de la couche de protection, ce qui rend très difficile la modification sans aboutir à la destruction de la carte.

Par ailleurs, avec le procédé de type connu, afin que les données imprimées sur le corps de carte correspondent de manière certaine aux données écrites dans la zone-mémoire, l'écriture des données de personnalisation dans la zone-mémoire et l'impression des données de personnalisation correspondantes sont réalisées carte par carte et de façon synchrone. Le procédé est donc peu flexible. En outre, l'étape de personnalisation électrique, c'est-à-dire d'écriture des données de personnalisation dans la zone-mémoire, est généralement une opération plus rapide que l'étape de personnalisation graphique, c'est-à-dire d'impression des données de personnalisation. Il en résulte que la machine réalisant la personnalisation électrique fonctionne en sous-charge afin d'éviter un engorgement de la machine de personnalisation graphique.

Selon un autre aspect de l'invention, le procédé comprend, préalablement à l'étape d'écrire dans une zone-mémoire, l'étape de reconnaître les données de personnalisation du corps de carte.

Ainsi, grâce à la reconnaissance préalable des données du corps de carte, l'étape de personnalisation électrique peut être effectuée à n'importe quel moment après l'étape de personnalisation graphique. Le procédé est de la sorte particulièrement flexible. En outre, on peut procéder à l'impression des données de personnalisation sur des lots de cartes, par exemple sur des planches regroupant plusieurs cartes, puis procéder individuellement à l'écriture dans la zone-mémoire du circuit intégré des données correspondant aux données de personnalisation préalablement reconnues. Le procédé de fabrication est ainsi rationalisé et permet d'exploiter au mieux les possibilités des machines utilisées pour le mettre en oeuvre. L'invention permet en outre de réaliser la personnalisation graphique et la personnalisation électrique sur des sites différents.

D'autres caractéristiques et avantages de l'invention ressortiront à la lecture de la description qui suit d'un mode de mise en oeuvre particulier non limitatif de l'invention.

Il sera fait référence aux dessins annexés, parmi lesquels :

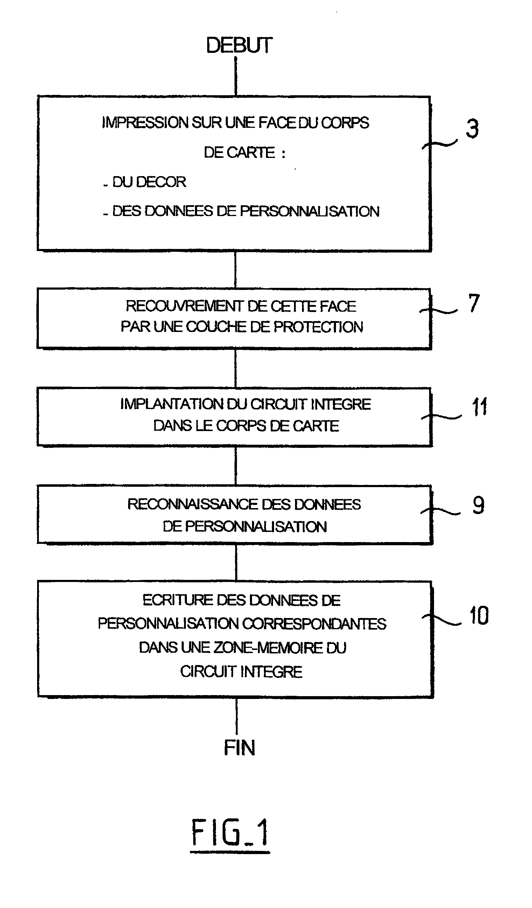

- la figure 1 est un diagramme par blocs d'un mode de mise en oeuvre du procédé de fabrication selon l'invention ;

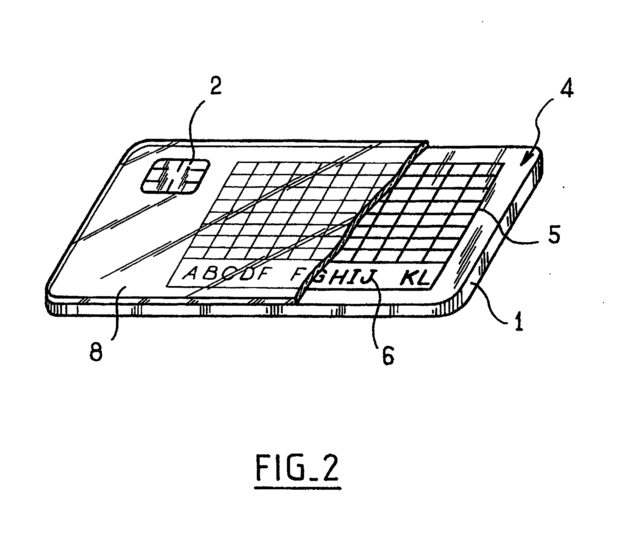

- la figure 2 est une vue en perspective, avec arrachement, d'une carte correspondant au procédé de l'invention.

En référence aux figures, le procédé ici décrit est destiné à la fabrication de cartes comportant un corps de carte 1.

Selon le mode de mise en oeuvre illustré, le procédé comprend l'étape 3 d'impression simultanée sur une face 4 du corps de carte 1 d'un décor 5, ici en forme de quadrillage, et de données de personnalisation 6. On entend par données de personnalisation au sens de l'invention toute donnée d'identification telle qu'un numéro de série, le nom ou un code d'identification du titulaire de la carte, l'adresse du titulaire, un code barre, une photographie, des empreintes digitales... L'impression simultanée du décor et des données de personnalisation est réalisée par exemple sur une machine d'impression numérique.

Une étape 7 de recouvrement de la face 3 du corps de carte 1 par une couche de protection 8 transparente succède à l'étape d'impression 3. De façon connue en soi, la couche de protection 8 peut être déposée par vernissage offset ou par sérigraphie, ou sous la forme d'un film tel qu'un film en polychlorure de vinyle.

Après le recouvrement, un circuit intégré 2 est inséré dans le corps de carte 1 lors d'une étape d'implantation 11, par exemple par usinage d'une cavité dans le corps de carte et collage d'un module comportant le circuit intégré.

Une étape 9 de reconnaissance des données de personnalisation 6 imprimées sur la face 3 est ensuite réalisée. La reconnaissance des données de personnalisation 6 est effectuée par exemple optiquement par laser dans le cas d'un code barre, par caméra ou autre.

Des données de personnalisation correspondant aux données de personnalisation 6 sont alors écrites dans une zone-mémoire du circuit intégré lors d'une étape 10. Le procédé de décoration et de personnalisation est alors terminé.

Bien entendu l'invention n'est pas limitée au mode de réalisation décrit et on peut y apporter des variantes de réalisation sans sortir du cadre de l'invention tel que défini par les revendications.

En particulier, bien que l'invention ait été décrite en relation avec une carte comportant uniquement un circuit intégré, l'invention est également applicable à une carte comportant à la fois un circuit intégré et une piste magnétique. Dans ce cas, on peut soit procéder à une reconnaissance unique de la personnalisation graphique puis effectuer en séquence la personnalisation électrique et la personnalisation magnétique, soit au contraire effectuer une reconnaissance avant chacune de ces opérations réalisées séparément.

Bien que dans le procédé décrit, l'impression du décor et l'impression des données de personnalisation soient effectuées simultanément, le décor et les données de personnalisation pourraient être imprimés successivement.

Bien que le procédé selon l'invention ait été décrit comportant une étape de reconnaissance des données de personnalisation, les étapes de personnalisation graphique et de personnalisation électrique peuvent être réalisées carte par carte de façon synchrone de sorte que l'étape de reconnaissance n'est pas nécessaire.

## Revendications

1. Procédé de fabrication d'une carte à circuit intégré, **caractérisé en ce qu'**il comprend dans l'ordre les étapes de :
- imprimer des données de personnalisation (6) sur une face (4) d'un corps de carte (1),
- implanter un circuit intégré dans le corps de carte (1),
- écrire dans une zone-mémoire du circuit intégré des données correspondant aux données de personnalisation du corps de carte.

2. Procédé de fabrication selon la revendication 1, **caractérisé en ce qu'**un décor (5) est imprimé de façon simultanée avec les données de personnalisation (6).

3. Procédé de fabrication selon la revendication 1 ou la revendication 2, **caractérisé en ce qu'**il comprend, postérieurement à l'étape d'impression, l'étape de recouvrir ladite face (4) du corps de carte (1) d'une couche de protection (8).

4. Procédé de fabrication selon l'une des revendications précédentes, **caractérisé en ce qu'**il comprend, préalablement à l'étape d'écriture dans une zone mémoire, l'étape de reconnaître les données de personnalisation (6) du corps de carte (1).

## Patentansprüche

1. Herstellungsverfahren einer Karte mit integriertem Schaltkreis,
**dadurch gekennzeichnet, dass** es der Reihe nach folgende Schritte umfasst:
- Aufdrucken von Personalisierungsdaten (6) auf eine Seite (4) eines Kartenkörpers (1),
- Einsetzen eines integrierten Schaltkreises in den Kartenkörper (1),
- Schreiben der den Personalisierungsdaten des Kartenkörpers entsprechenden Daten in einem Speicherbereich des integrierten Schaltkreises.

2. Herstellungsverfahren nach Patentanspruch 1, **dadurch gekennzeichnet, dass** gleichzeitig mit den Personalisierungsdaten (6) eine Dekoration (5) aufgedruckt wird.

3. Herstellungsverfahren nach Patentanspruch 1 oder 2, **dadurch gekennzeichnet, dass** es im Anschluss an die Druckphase die Überzugsphase der besagten Seite (4) des Kartenkörpers (1) mit einer Schutzschicht (8) umfasst.

4. Herstellungsverfahren nach einem der vorausgehenden Patentansprüche, **dadurch gekennzeichnet, dass** es vor der Schreibphase in einem Speicherbereich die Erkennungsphase der Personalisierungsdaten (6) des Kartenkörpers (1) umfasst.

## Claims

1. Method for producing an integrated circuit card, **characterized in that** it comprises, in order, the following steps:
- printing personalizing data (6) onto one surface (4) of a card body (1),
- implanting an integrated circuit into the card body (1),
- writing the data corresponding to the personalizing data of the card body into a storage area of the integrated circuit.

2. Production method according to claim 1, **characterized in that** a decorative element (5) is printed simultaneously with the personalizing data (6).

3. Production method according to claim 1 or claim 2, **characterized in that** it comprises, subsequent to the printing step, the step for coating said surface (4) of the card body (1) with a protective layer (8).

4. Production method according to any of the preceding claims, **characterized in that** it comprises, prior to the step for writing into a storage area, the step for recognizing the personalizing data (6) of the card body (1).
